# EUROPEAN PATENT SPECIFICATION

(11) **EP 3 308 522 B1**
(45) Date of publication and mention of the grant of the patent: **01.04.2020**
(21) Application number: 16808011.7
(22) Date of filing: 23.05.2016
(51) Int. Cl.: H04L 29/06, H04L 29/08

(54) **SYSTEM, APPARATUS AND METHOD FOR MULTI-OWNER TRANSFER OF OWNERSHIP OF A DEVICE**
SYSTEM, VORRICHTUNG UND VERFAHREN ZUR ÜBERTRAGUNG DER EIGENTÜMERSCHAFT EINER VORRICHTUNG ZWISCHEN MEHREREN EIGENTÜMERN
SYSTÈME, APPAREIL ET PROCÉDÉ DE TRANSFERT DE PROPRIÉTÉ D'UN DISPOSITIF ENTRE PROPRIÉTAIRES MULTIPLES

(30) Priority: 09.06.2015 US 201562172886 P; 25.09.2015 US 201514865191
(43) Date of publication of application: 18.04.2018
(73) Proprietor: Intel Corporation, Santa Clara, CA 95054 (US)
(72) Inventor: WALKER, Jesse, Hillsboro, Oregon 97124 (US); SMITH, Ned M., Beaverton, Oregon 97006 (US); HERBERT, Howard C., Phoenix, Arizona 85045 (US); SASTRY, Manoj R., Portland, OR 97229 (US)
(74) Representative: Maiwald Patent- und Rechtsanwaltsgesellschaft mbH
(86) International application number: PCT/US2016/033829
(87) International publication number: WO 2016/200597

(56) References cited:
- JP-A- 2009 086 906
- US-A1- 2005 114 270
- US-A1- 2008 010 078
- US-A1- 2009 183 241
- US-A1- 2013 007 877
- US-A1- 2013 019 105
- US-A1- 2014 095 867
- US-A1- 2015 134 954

## Description

### Background

Internet of Things (loT) networks can include many embedded systems that vary significantly in terms of device capability, complexity and connectivity. Security issues may arise in securing loT networks when a device is on-boarded (introduced into the network). During on-boarding a determination can be made whether the device poses an increased security risk to the rest of the network. Mechanisms for making such determination may vary widely and have variability in terms of trust properties.

US 2005/0114270 describes techniques for writing data directly onto a product to record each ownership transfer. As a result, the product itself now carries a traceable, auditable, non-forgeable, non-repudiable proof of ownership (and, optionally, ownership history) that can be used in a variety of ways. This recorded ownership transfer information provides an electronic receipt, which may be used by the present owner to prove his or her ownership. (Optionally, other types of transfers may be recorded in addition to, or instead of, ownership transfers.) A transfer agent or registrar creates a unique transaction identifier to represent the transfer, and preferably creates a cryptographic signature over fields representing the transfer. This information is then recorded in a repository that is external from the product.

US 2008/0010078 reports methods and systems for electronically representing records of obligations are provided. The records are stored such that content describing an obligation from an obligor to an obligee is unalterable, identifiable as current and authentic, and non-repudiable. Transfers of ownership of the obligation may also be controlled and recorded using the electronic records. An obligation may not be recorded as being transferred without the consent of the of the current owner of the obligation. Security interests in obligations may also be recorded. The secured party may be able to control transfer of ownership of the obligations and modification of the electronic records. In preferred embodiments, these features may be achieved by using various digital signature and encryption techniques.

US 2014/0095867 relates to a device for securely provisioning trust anchors which includes generating a database wrapper key as a function of computing device hardware. The database wrapper key encrypts a key database when it is not in use by a trusted execution environment and may be generated using a Physical Unclonable Function (PUF). A local computing device establishes a secure connection and security protocols with a remote computing device. In establishing the secure connection, the local computing device and remote computing device may exchange and/or authenticate cryptographic keys, including Enhanced Privacy Identification (EPID) keys, and establish a session key and device identifier(s). One or more trust anchors are then provisioned depending on whether unilateral, bilateral, or multilateral trust is established. The local computing device may act as a group or domain controller in establishing multilateral trust. Any of the devices may also require user presence to be verified.

### Summary of the Invention

The invention is defined according to the claims as appended herein.

### Brief Description of the Drawings

FIG. 1A is a block diagram of an environment in which an ownership transfer is to occur in accordance with an embodiment of the present invention.
FIG. 1B is a flow diagram of a high level method for transferring ownership of a device in accordance with an embodiment of the present invention.
FIG. 2 is a flow diagram of a high level method for device ownership transfer in accordance with another embodiment.
FIG. 3 is a communication diagram of a seguence of communications and operations between a buyer device and a seller device in accordance with an embodiment.
FIG. 4 is a block diagram of an example system with which embodiments can be used.
FIG. 5 is a block diagram of a system in accordance with another embodiment of the present invention.
FIG. 6 is a block diagram of a wearable module in accordance with another embodiment.

### Detailed Description

In various embodiments, a trusted computing mechanism is used to establish the trust and security properties of a device. Trust in the on-boarding may include having a device manufacturer (and/or previous owner if different from the manufacturer) participate in a protocol and method for trusted device owner transfer. Some approaches address the case where manufacturer-supplied keying material allows secure on-boarding of new devices. But these approaches may not work in a case where a previous owner who is not the device manufacturer may have at first taken ownership then subsequently wishes to transfer ownership to a second party.

Embodiments may be used to transfer device ownership from an original manufacturer to the device's first owner and for subsequent transfers. Embodiments provide a cryptographically protected object known as a device title. The title is a data structure that establishes a device identity and then cryptographically binds the device owners to the title according to the number of times the device ownership state changes. A device owner transfer protocol ensures the title is authenticated, updated and transferred such that the title reflects the owner transfer semantics and that unintended semantics are also controlled. For example, the semantics include that the current owner intended to transfer to the new owner; the current owner is indeed the current owner; the new owner obtains complete ownership of the device and the previous owner gives up ownership (in cases where a device cannot have two or more owners). These properties are established cryptographically and may be verified independently.

Understand that in different embodiments, many different types of entities may act as buyer or seller. In some cases, ownership transfers may be reflected from early in a supply chain, such as an initial ownership transfer from a manufacturer of an integrated circuit or other technology device to a system manufacturer such as an original equipment manufacturer (OEM). In turn, additional ownership transfers, e.g., from an OEM to a value added reseller (VAR) may be recorded, along with additional ownership transfers within a supply chain, including from a VAR to a retailer, retailer to a consumer, consumer-to-consumer, and so forth. Understand that in other cases, the ownership transfer protocol as described herein may not be initiated until further down in a supply chain, such as a first sale to an end user consumer.

In one embodiment, an Intel® SigmaCE (sign and MAC) protocol may be used for transferring the title that accommodates the title data structure. Privacy is also a concern for titled devices as unique identifiers such as a device ID may be used to track and correlate transactions involving the device across multiple owners. Embodiments may address privacy concerns in part by basing the identity on a secure identifier such as an Intel® enhanced privacy identifier (EPID) and may use a method for returning the device to manufacturer defaults, thereby erasing previous owner state and may recycle device identifiers.

Embodiments thus use a digital title to capture device ownership semantics, maintain a record of buyers (entities to which ownership is transferred), ensure the seller (current owner) intended to transfer ownership to the buyer, ensure the seller is the current owner, allows the device to be reset to manufacturer defaults without authorization of current owner, and protects against attacks to privacy that might be achieved given knowledge of information contained in the title.

In an embodiment, a title may be provided that has the following structure shown in Table 1 (which may be referred to herein as an owner transfer title structure).

**Table 1**

| |
|---|
| title:: root-record \| title owner-record |
| root-record:: device-record owner-record |
| device-record:: device-id device-description maker-id maker-public-key |
| maker-signature |
| device-id:: byte-string |
| device-description:: byte-string |
| maker-id:: byte-string |
| maker-public-key:: public-key |
| maker-signature:: signature |
| owner-record:: buyer-public-key hash xfer-time seller-endorsement |
| buyer-public-key:: public-key |
| hash:: bit-string |
| xfer-time:: timestamp |
| seller-endorsement:: signature |
| chained-ORH:: HASH(previous-owner-record-hash, new-owner-record-hash) |
| owner-record-hash:: HASH(owner-record) |

In the above structure of Table 1, device-id is unique to a given device D relative to the manufacturer, which is identified by maker-id and maker-public-key. The design assumes D can recognize a valid maker-public-key, e.g., its hash is stored in a non-volatile storage (e.g., ROM). The device-description is the manufacturer's description of D. The buyer public-key of the first ownership-record is the maker-public-key from the device description and the signature is verified using that key. The ownership-record chain is similar to a Bitcoin block-chain. Ownership transfer can be effected by the seller appending a new ownership-record to the title, endorsing the public key of the buyer with the signature of the seller.

Note that with regard to the title structure shown above, certain fields may be static, while other fields may dynamically change during an ownership transfer. In one embodiment, device-id, device-description, maker-id, maker-public-key, and maker-signature, may all be static fields. In turn owner-record, buyer-public-key, hash, xfer-time and seller-endorsement may dynamically be updated as a result of an ownership transfer. However, in some cases a device-id may change on ownership transfer to protect privacy, as described further herein. And note that as described herein a new owner-record can be concatenated or appended to the title for each new ownership transfer.

The root key may be represented as the owner's signature verification key. The device D can use its root authorization key (root D) to verify signatures by its owner. The owner can sign any device D configuration change to ensure modifications are authorized. The device can verify this change is authorized by verifying the signature accompanying the configuration change event. A symmetric key cannot prove that a message was created by the owner. The seller is the (current) device owner. The device D has its own manufacturer-endorsed key to prove it is not a rogue device or software, where this key may be a direct anonymous attestation (DAA) key or EPID.

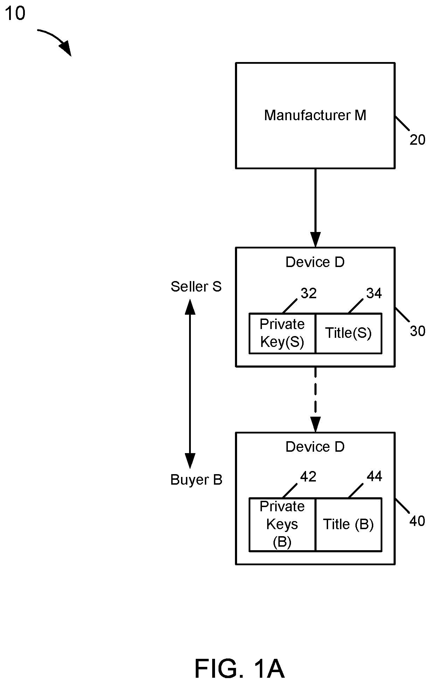

In an embodiment, ownership transfer is achieved between four parties: 1) a "buyer" B; 2) a "seller" S; 3) a device D, whose ownership will be transferred from S to B; 4) the manufacturer M of device D, the original owner of D, as shown in FIG. 1A. Each device D has a root authorization key (rootD). This rootD authorizes all configuration changes on D (or is used to delegate authorization to other keys). Ownership transfer seeks to replace the seller S's root authorization key rootD with the buyer B's (new) root authorization key.

As illustrated in FIG. 1A, manufacturer 20 may supply device 30 with one or more private keys, including a rootD key. When ownership is transferred to seller S, device 30 includes in secure storage one or more private keys 32 of the seller (S) and an ownership title 34 that proves that seller S is the valid current owner of device 30. After ownership transfer to buyer B, device D (now represented by numeral 40) stores one or more private keys 42 of buyer B and an ownership title 44 that verifiably proves that ownership is vested in buyer B, as described herein.

In an embodiment a representative set of protocol messages may be used to transfer ownership in accordance with an embodiment of the present invention. At a high level, after a secure key exchange, a message may be sent by a buyer B to establish the buyer is interested in obtaining ownership, and a seller (e.g., current owner of device D) includes the hash of the old title in a Diffie-Hellman (DH) exchange to express an interest in transferring ownership. In a subsequent message, the buyer verifies the current owner indeed owns the device to which the buyer intends to become the new owner. In a following message, the buyer completes the title transfer by signing and encrypting the new title before delivering it to the device. The device verifies that the new title (constructed by the buyer) matches the terms established by the seller as represented in the new-owner-record. The appropriate fields are compared for accuracy, and then a new title along with a new root device key replaces the previous title and key.

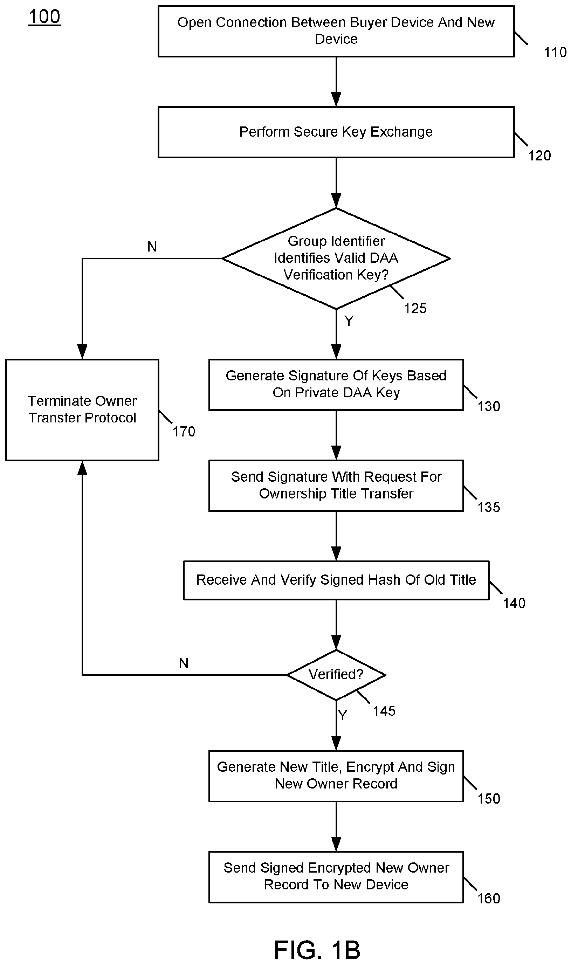

Referring now to FIG. 1B, shown is a flow diagram of a high level method 100 for transferring ownership of a device (referred to in this example as a new device) to a new owner, namely a buyer having a buyer device, from the point of view of the buyer device. As seen in FIG. 1, method 100 begins by opening a connection between the buyer device and the new device (block 110). This connection may be established responsive to a registration or broadcast of the existence of the new device within a given network area, which as one example may be an loT network. In other situations, this connection may be responsive to a discovery of the new device by the buyer device. In any case, at block 110, a connection is opened between the two devices.

Thereafter at block 120 a secure key exchange is performed. Details of this secure key exchange are described below. Suffice to describe in one embodiment, this secure key exchange may be incorporated into a given secure communication session, such as a Datagram Transport Layer Security (DTLS) session. In the embodiment described herein, this key exchange may be based on a Diffie-Hellman (DH) key agreement protocol. At diamond 125, it is determined next whether a group identifier (received from the new device in the buyer device) identifies a valid direct anonymous attestation (DAA) verification key of a DAA group. If so, control passes to block 130 where the buyer device may generate a signature of a set of keys based on its private DAA key. In an embodiment, the keys on which this signature is generated may include the public DH keys of the devices. Next at block 135, the buyer device may send the signature with a request for ownership title transfer to the new device.

Responsive to such request, the new device may perform various operations, including generating a signed hash of the existing ownership title record of the new device (referred to in this embodiment as an "old title") (block 140). If it is determined that the signed hash is verified (diamond 145), control passes to block 150 where the buyer device may generate a new owner record for updating an ownership title record. Details regarding generation of this new owner record are described further herein. The buyer device also may encrypt and sign this new owner record. At block 160, the signed encrypted new owner record may be sent to the new device. As will be described herein, the new device may verify this new title and cause its title to be updated with this new owner record. In some cases, the owner record may be concatenated with or appended to the old title to form the updated or new title. As further shown in FIG. 1B, should verifications not be successfully performed, control passes to block 170 where an ownership transfer protocol may be terminated. Understand while shown at this high level in the embodiment of FIG. 1, variations and alternatives are of course possible. For example in other embodiments, additional information may be provided from the buyer device and incorporated into the title.

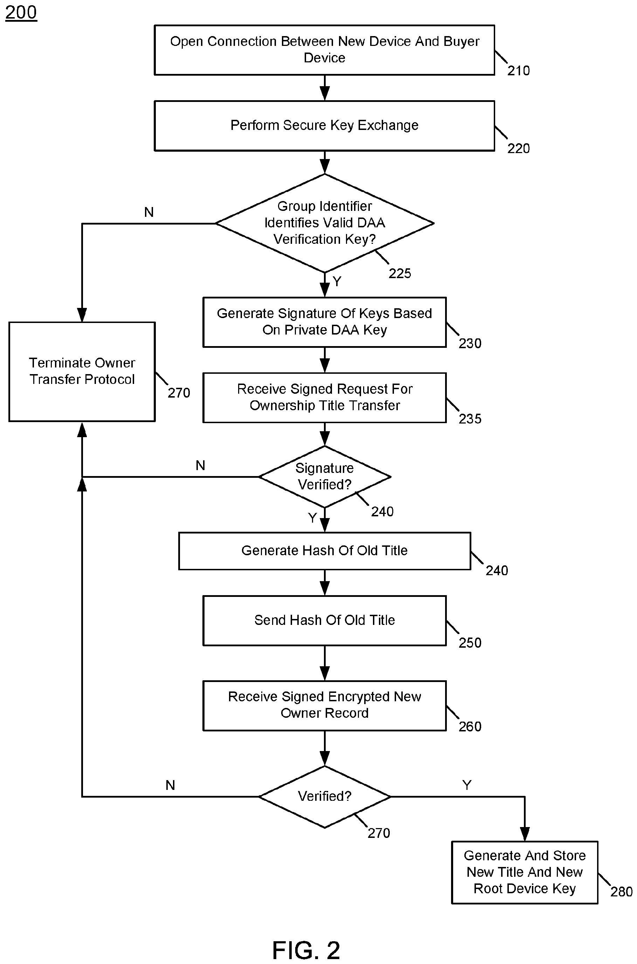

Referring now to FIG. 2, shown is a flow diagram of a high level method 200 for device ownership transfer, this time from the point of view of the seller device (namely the new device or the device to become owned by the buyer). As above, a connection is opened between the devices and a secure key exchange performed (block 210 and 220) further as described above, the new device can determine whether a group identifier identifies a valid DAA verification key and if so, a signature of DH public keys may be made based on the private DAA key of the new device (diamond 225 and block 230).

Still with reference to FIG. 2, next at block 235 a request is received. Namely this request is a signed request for an ownership title transfer received from the buyer device. At diamond 240 it is determined whether this signature is verified. If so, control passes to block 240 where the new device may generate a hash of the old title (namely the current title). This hash may then be sent at block 250. Note that the sending of this hash acts as a verification that the current owner owns the device and a willingness to transfer ownership to the buyer.

With reference to FIG. 2 still, control next passes to block 260 where a signed encrypted new owner record may be received from the buyer device. As described above this signed encrypted new owner record includes various information of the new owner. At diamond 270 the new device may determine whether this new title information is verified. If so, control passes to block 280 where the new title may be generated and stored. In addition, a new root key (which may be received from the buyer device in connection with the new title) may also be stored. In an embodiment, the new title generation may be implemented by concatenating the ownership record received from the new device with the existing title information to generate an updated title. Note that if the various verifications do not succeed, control passes to block 270 where the owner transfer protocol is terminated. Understand while shown at this high level in FIG. 2, many variations and alternatives are possible.

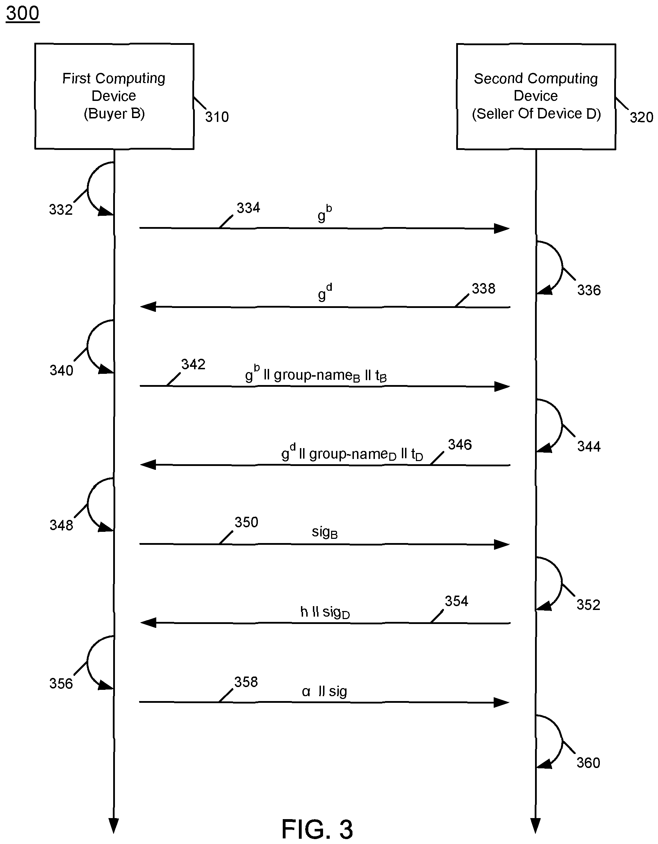

Referring now to FIG. 3, shown is a communication diagram of a sequence of communications and operations between a buyer device and a device to which the buyer seeks ownership (also referred to as a second computing device or a seller device), in accordance with an embodiment. This ownership transfer may be performed in an environment 300, which may be a given network such as an loT or other network.

Referring now to FIG. 3, a first computing device 310 (namely a computing device of a buyer B, such as a server computer, desktop computer, tablet computer, smartphone or other portable device) establishes a secure communication channel with a second computing device 320 (device D, currently owned by a seller(S)), to which buyer B seeks ownership. Initially, device 310 may perform a sub-flow 332 to generate a private DH key, b, of first computing device 310. In an embodiment, this private key may be generated according to: *b*←*ₛ*{*0,1}ⁿ.* It is appreciated that DH keys and/or other calculations described herein may be performed under a selected prime modulus (via modulo arithmetic). Further in selecting the private DH key, b, computing device 310 may select a random integer or n-bit sequence (mod the selected prime).

Thus a message 334 is sent, which communicates a public DH key, *g^{b},* for computing device 310 based on the private DH key. Note that the primitive root g is a generator for an abelian group under the selected prime modulus and is used by both computing devices 310 and 320 during the secure key exchange protocol. These devices may use any suitable technique to agree upon the particular primitive root and prime for the exchange.

At sub-flow 336, second computing device may verify that *g^{b}* is an element of the Diffie-Hellman group. Device 310, also at sub-flow 336 may generate a private DH key, d, of computing device 320, in accordance with: *d←ₛ{0,1}ⁿ.* Still further in sub-flow 336, computing device 310 generates a public DH key *g^{d}* based on the private key.

Second computing device 320 may thus send message 338 including this public DH key *g^{d}* to first device 310. Next, in sub-flow 340, device 310 may verify that *g^{d}* is an element of the Diffie-Hellman group. Also during sub-flow 340, device 310 may generate a shared public key, *g^{db}*, perform various pseudo-random function (PRF) calculations, and then generate a keyed hash, *t_{B},* e.g., according to a suitable hash algorithm. More specifically in sub-flow 340, first device 310 may perform the following: *g^{db}*←*(g^{d})^{b}*; *dk←prf(0,g^{db})*; delete *b* and *g^{db}*; *ak←prf(dk,1);* and *f_{B}←prf(ak,g^{b}*||*group-name_{B}).* In an embodiment, this *group-name* may include a hint to find a DAA verification key for a DAA group with which the device is associated. In an embodiment, *t_{b}* may be generated to provide a temporary pseudo-random function value, such as a temporary hash used to provide handshake context. Then first device 310 sends message 342, which includes the public DH key, DAA group identifier, and/or the keyed hash of computing device 310, as follows: *g^{b}*||*group-name_{B}*||*t_{B}.*

Note that in other embodiments, a proximity-based security measure or authentication factor may also be contemplated. Specifically, the above messages to provide public DH keys between the devices may further generate those public DH keys based on an out-of-band value. For example, a new buyer may be required to confirm proximity to a device via an out-of-band channel such as by way of input of a PIN or other random number. In such cases, note that the public DH keys in messages 334 and 338 may be modified to *g*^{*b*+*PIN*} and *g*^{*d*+}*^{PIN}.* Other out-of-band authentication factors may include proximity authentication by way of near field communication, QR codes, ultrasound or so forth.

Still with reference to FIG. 3, at sub-flow 344, computing device 320 may verify *g^{b}* is as above, and verify that *group-name_{B}* identifies a known DAA verification key. Further, computing device 320 may generate *g^{bd}←(g^{b})^{d}*; *dk←prf(0,g^{bd})*; delete d and *g^{bd}; ak←prf(dk,1);* and verify *t_{B}*=*prf(ak, g^{b}*||*group-name_{B}).* Still further during this sub-flow, second device 320 may generate a keyed hash according to: *t_{D}←prf(ak,g^{d}*||*group-name_{D}).* Then second computing device 320 may send message 346 including *g^{d}*||*group-name_{D}*||*t_{D},* to computing device 310.

In sub-flow 348, first computing device 310 may verify *g^{d}* is as above, verify *group-name_{D}* identifies a known DAA verification key, and verify *t_{D}* = *prf(ak, g^{d}* || *group-name_{D}).* Assuming that this verification proceeds successfully, first device 310 may then generate a request for ownership via a title transfer in accordance with the following calculations to generate a signed request: *v←prf(dk, 2)*, and *sig_{B}*←*sign_{b}(g^{b}* || *gd*|| *v, group-name_{A}).* And at message 350, device 310 may send the message including *sig_{B}* to device 320.

Proceeding now at sub-flow 352, second computing device 320 may generate the value *v* according to *prf(dk, 2).* Still further in sub-flow 352, second device 320 may verify *sig_{A}* over *g^{b}* || *g^{d}*|| *v* using the verification key for *group-name_{B},* and generate a hash of the current title (referred to as "old-title"). Still further, second device 320 may also calculate: *sk*←*prf(ak, 3), sid←hash(g^{b}* ||*g^{d}* || *group-name_{B}*|| *group-name_{D})*; *h←hash(old-title_{D})*; *sig_{D}*←*sign_{D}(g^{d}* || *g^{b}* || *v* || *h, group-name_{D})*; and then delete *dk, ak.* And second computing device 320 may send a message 154 including *h*||*sig_{D}.*

Responsive to receipt of this message, first device 310 may generate a *new-title_{D}* as *title_{D}* || *new-owner-record.* First device 310 may also verify *h* = *hash (title_{D})*; verify *sig_{D}* over *g^{d}* || *g^{b}* || *v* || *h* using the verification key for *group-name_{D}.* After verification, first device 310 may calculate *sk*←*prf(ak, 3), sid←hash(g^{b}* || *g^{d}* || *group-name_{B}*|| *group-name_{D})*; and delete *dk, ak.* First device 310 may also generate a signature *sig*←*sig(sk_{B}, v* || *vk_{B}* || *new-title_{D})*; and *a←*[*vk_{B}* || {*new-titleD*}]*ₛₖ*; and the delete *v* and *sk*. Finally, first device 310 may send a message 358 including *α* || *sig* to second device 320.

Responsive to receipt of this message which includes new title information, second computing device 320 may perform sub-flow 360 to update the ownership record to indicate title is now vested in buyer *B*. Specifically, second device 320 may use *sk* to extract *vk_{B}* and *new-title_{D}* from *α*; use *vk_{B}* to verify *sig* over *v* || *vk_{B}* || *new-title_{D}*; parse *new-title_{D}* as *title_{D}* || *new-owner-record;* verify *hash(title_{D})* = *hash(old-title_{D})*; verify *hash(old-title_{D})* = *new-owner-record.hash;* verify *vk_{B}* = *new-owner-record.buyer-public-key*; use *root_{D}* to verify *new-owner-record.seller-endorsement*; delete *v* and *sk*; *roof_{D}*←*vk_{B}*; and *old-title_{D}*←*new-title_{D}.* As such, second device 320 updates the title data structure to a new title having the additional and updated ownership information and transfer information. In addition, second device 320 replaces the old root device key with a new root device key. Understand also that in some cases, a hash of the new title may be archived to a third party, e.g., for use in a subsequent title dispute resolution.

Note that second device 320 may archive a hash of the new title record once it is satisfied that the transfer of ownership from the current owner to the new owner is to be completed. More specifically, this hash may be provided to a third party archive service to enable its use for a subsequent title dispute resolution. Understand that a hash of a previous transfer of ownership (from a previous owner to the current owner) would have already been archived from the previous ownership transfer event.

As previously discussed, the very first ownership establishment event is that of the manufacturer at manufacturing time. A manufacturer may register a hash of the first ownership record with this archive service. This hash may in fact double as a reference hash used for whitelisting and attestation services seeking to verify a device identifier established at manufacturing. In some cases, this hash may be part of a more complex reference hash describing the device in detail as defined by the Trusted Computing Group (TCG's) platform certificate structure and the reference integrity measurement (RIM) structure as defined by the TCG.

While shown with this particular embodiment in FIG. 3, understand that many variations and alternatives are possible. Further, while shown with a seven-message Sigma protocol, embodiments may provide for a less complex variant, such as a three-message Sigma protocol.

In an embodiment, the new title is a concatenation of the previous title; hence a history of previous ownership is preserved when the new owner is established. An independent entity may verify ownership transfer events by computing a hash-chain of the transfer events and comparing to the hash of the current title.

The title is bound to the device by connecting the device-id in the title with the device-id of the device, in an embodiment. For example, the device on-boarding and manufacturing process may select a device identifier and embed the identifier in the device, for example, by blowing field programmable fuses representing the device id.

In a scenario where a device id is considered privacy sensitive, the new device owner may request that the device change its device ID. For example, programmable read only memory may be reprogrammed with the new device ID. The change in device ID may be reflected in the title by including a new device-id value in the device-record. For example the original device-record of Table 1:
device-record:: device-id device-description maker-id maker-public-key maker-signature
may become:
device-record:: old-device-id new-device-id device-description maker-id maker-public-key maker-signature
old-device-id:: device-id-list | device-id
device-id-list:: [device-id]

In a scenario where the title contents are privacy sensitive, the title may be confidentiality protected within a trusted execution environment (TEE) of the device, such as Intel® SGX, Intel® MemCore, Intel® CSE, Intel® VT-X, Intel® IOT-OS with Smack, or ARM TrustZone, etc.. A TEE specific key may be used to encrypt the title when not contained in the TEE. A policy controlling the use of the key may specify that the old-device-id portion is omitted when a read request is submitted to the TEE and the current device ID matches the current device-id in the title. An independent verifier may desire to use a read interface to make an independent verification of ownership, but a previous owner may wish to remain anonymous. This policy may be achieved by the TEE substituting a hash of the device-id-list in place of the list value and supplying the replacement hash to the verifier entity. The verifier may presume the replacement hash is satisfactorily protecting the privacy of previous owners and include this with the verification.

Embodiments thus use a title to an loT device to track a device owner, and use the title and a Sigma protocol to transfer ownership of a device, including potentially to secondary and tertiary device owners. Use of a title provides for independent verification of device ownership status. Still further, use of a title and a TEE can protect privacy where device ID is changed between owners.

Note that the verification of the new title is accomplished by way of an exchange in which both buyer and seller establish their mutual intent to effect an ownership transfer (namely that device D accepts buyer B as its new owner, and that buyer B intends to be the owner of device D). Note that in some cases, the hashes of the title may be recorded in a public log. In this way, a prior owner having its prior device ID (in an embodiment in which device ID is updated on ownership transfer) may access the log, e.g., to perform a log walk (such as with a blockchain) to verify that they were a prior owner of the device. Note that when device ID changes on an ownership transfer, a hash of the previous device ID is retained within the title, to enable validation of the prior owner transfer chain.

In an embodiment, third party verification of ownership transfers may occur where a hash of the title is supplied to a third party logger. Here a hash structure (namely the chained-ORH of Table 1) is maintained by the logger. The buyer maintains a previous-owner-record-hash in the title and when a new owner is achieved, a new owner-record-hash is computed to form an updated chained-ORH. The updated chained-ORH is sent to the logger. In turn, the logger maintains the most recent ORH.

If a third party wishes to verify the current owner, it establishes a secure session with the TEE and requests a copy of the chained-ORH value. This received copy is compared to the logged value. If they match then the current owner is corroborated. If the values do not match, then the current owner is not corroborated and the identity (privacy) is not revealed.

If a history of all previous owners is desired (e.g., for a court case where previous owners receive a summons) each alleged previous owner provides their owner-record information at the time of transfer. If some or all of the owner-record information is not available, the court may appoint a lab to attempt to reconstruct the owner-record through forensic means. If the lab is successful in reconstructing the owner-record, it is proven that the previous owner was indeed an owner. This may be useful if the court intends to establish use of a computer in the commission of a felony.

If a previous owner who is not accused of commission of a felony wishes to retain privacy, such user may supply the owner-record-hash at the time of the owner transfer to satisfy the court but will remain anonymous to the lab, press and other observers.

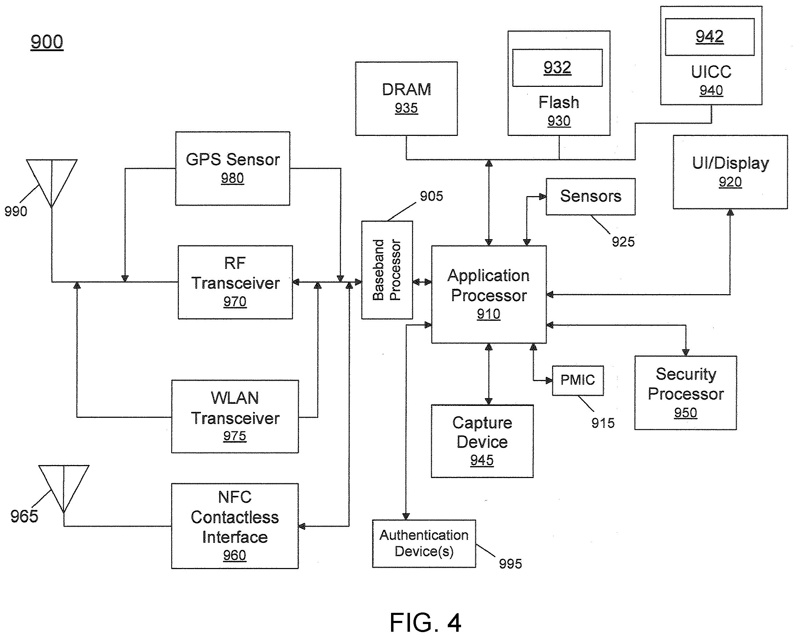

Referring now to FIG. 4, shown is a block diagram of an example system with which embodiments can be used. As seen, system 900 may be a smartphone or other wireless communicator or any other loT device. A baseband processor 905 is configured to perform various signal processing with regard to communication signals to be transmitted from or received by the system. In turn, baseband processor 905 is coupled to an application processor 910, which may be a main CPU of the system to execute an OS and other system software, in addition to user applications such as many well-known social media and multimedia apps. Application processor 910 may further be configured to perform a variety of other computing operations for the device.

In turn, application processor 910 can couple to a user interface/display 920, e.g., a touch screen display. In addition, application processor 910 may couple to a memory system including a non-volatile memory, namely a flash memory 930 and a system memory, namely a DRAM 935. In some embodiments, flash memory 930 may include a secure portion 932 in which secrets and other sensitive information may be stored. As further seen, application processor 910 also couples to a capture device 945 such as one or more image capture devices that can record video and/or still images.

Still referring to FIG. 4, a universal integrated circuit card (UICC) 940 comprises a subscriber identity module, which in some embodiments includes a secure storage 942 to store secure user information. System 900 may further include a security processor 950 that may implement a TEE as described earlier, and which may couple to application processor 910. Furthermore, application processor 910 may implement a secure mode of operation, such as Intel® SGX for hosting of a TEE, as described earlier. A plurality of sensors 925, including one or more multi-axis accelerometers may couple to application processor 910 to enable input of a variety of sensed information such as motion and other environmental information. In addition, one or more authentication devices 995 may be used to receive, e.g., user biometric input for use in authentication operations.

As further illustrated, a near field communication (NFC) contactless interface 960 is provided that communicates in a NFC near field via an NFC antenna 965. While separate antennae are shown in FIG. 4, understand that in some implementations one antenna or a different set of antennae may be provided to enable various wireless functionality.

A power management integrated circuit (PMIC) 915 couples to application processor 910 to perform platform level power management. To this end, PMIC 915 may issue power management requests to application processor 910 to enter certain low power states as desired. Furthermore, based on platform constraints, PMIC 915 may also control the power level of other components of system 900.

To enable communications to be transmitted and received such as in one or more loT networks, various circuitry may be coupled between baseband processor 905 and an antenna 990. Specifically, a radio frequency (RF) transceiver 970 and a wireless local area network (WLAN) transceiver 975 may be present. In general, RF transceiver 970 may be used to receive and transmit wireless data and calls according to a given wireless communication protocol such as 3G or 4G wireless communication protocol such as in accordance with a code division multiple access (CDMA), global system for mobile communication (GSM), long term evolution (LTE) or other protocol. In addition a GPS sensor 980 may be present, with location information being provided to security processor 950 for use as described herein when context information is to be used in a pairing process. Other wireless communications such as receipt or transmission of radio signals, e.g., AM/FM and other signals may also be provided. In addition, via WLAN transceiver 975, local wireless communications, such as according to a Bluetooth™ or IEEE 802.11 standard can also be realized.

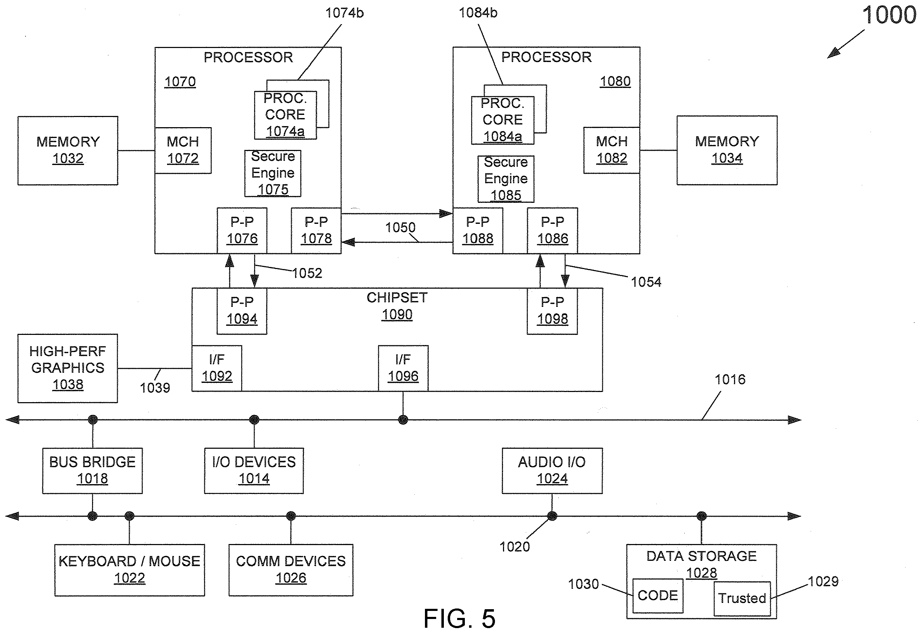

Referring now to FIG. 5, shown is a block diagram of a system in accordance with another embodiment of the present invention. As shown in FIG. 5, multiprocessor system 1000 is a point-to-point interconnect system such as a server system, and includes a first processor 1070 and a second processor 1080 coupled via a point-to-point interconnect 1050. As shown in FIG. 5, each of processors 1070 and 1080 may be multicore processors such as SoCs, including first and second processor cores (i.e., processor cores 1074a and 1074b and processor cores 1084a and 1084b), although potentially many more cores may be present in the processors. In addition, processors 1070 and 1080 each may include a secure engine 1075 and 1085 to perform security operations such as attestations, loT network onboarding or so forth.

Still referring to FIG. 5, first processor 1070 further includes a memory controller hub (MCH) 1072 and point-to-point (P-P) interfaces 1076 and 1078. Similarly, second processor 1080 includes a MCH 1082 and P-P interfaces 1086 and 1088. As shown in FIG. 5, MCH's 1072 and 1082 couple the processors to respective memories, namely a memory 1032 and a memory 1034, which may be portions of main memory (e.g., a DRAM) locally attached to the respective processors. First processor 1070 and second processor 1080 may be coupled to a chipset 1090 via P-P interconnects 1052 and 1054, respectively. As shown in FIG. 5, chipset 1090 includes P-P interfaces 1094 and 1098.

Furthermore, chipset 1090 includes an interface 1092 to couple chipset 1090 with a high performance graphics engine 1038, by a P-P interconnect 1039. In turn, chipset 1090 may be coupled to a first bus 1016 via an interface 1096. As shown in FIG. 5, various input/output (I/O) devices 1014 may be coupled to first bus 1016, along with a bus bridge 1018 which couples first bus 1016 to a second bus 1020. Various devices may be coupled to second bus 1020 including, for example, a keyboard/mouse 1022, communication devices 1026 and a data storage unit 1028 such as a non-volatile storage or other mass storage device. As seen, data storage unit 1028 may include code 1030, in one embodiment. As further seen, data storage unit 1028 also includes a trusted storage 1029 to store sensitive information to be protected. Further, an audio I/O 1024 may be coupled to second bus 1020.

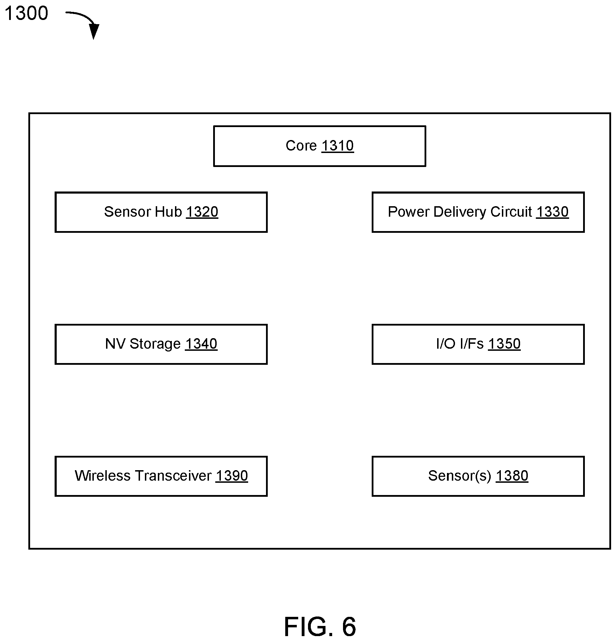

Embodiments may be used in environments where loT devices may include wearable devices or other small form factor loT devices. Referring now to FIG. 6, shown is a block diagram of a wearable module 1300 in accordance with another embodiment. In one particular implementation, module 1300 may be an Intel® Curie™ module that includes multiple components adapted within a single small module that can be implemented as all or part of a wearable device. As seen, module 1300 includes a core 1310 (of course in other embodiments more than one core may be present). Such core may be a relatively low complexity in-order core, such as based on an Intel Architecture® Quark™ design. In some embodiments, core 1310 may implement a TEE as described herein. Core 1310 couples to various components including a sensor hub 1320, which may be configured to interact with a plurality of sensors 1380, such as one or more biometric, motion environmental or other sensors. A power delivery circuit 1330 is present, along with a non-volatile storage 1340. In an embodiment, this circuit may include a rechargeable battery and a recharging circuit, which may in one embodiment receive charging power wirelessly. One or more input/output (IO) interfaces 1350, such as one or more interfaces compatible with one or more of USB/SPI/I²C/GPIO protocols, may be present. In addition, a wireless transceiver 1390, which may be a Bluetooth™ low energy or other short-range wireless transceiver is present to enable wireless communications as described herein. Understand that in different implementations a wearable module can take many other forms.

The following Examples pertain to further embodiments.

In Example 1, a device comprises: a first processor to execute in a first TEE, where, in the first TEE, the first processor is to: perform a secure key exchange between the device and a second device, responsive to a request to transfer ownership of the device from a seller to a buyer; generate a hash of a first title of the device, the first title comprising a first ownership record having a public key of the seller, where the public key of the seller is endorsed with a signature of a second seller that sold the device to the seller; send the hash of the first title to the second device; receive a new title structure from the second device, the new title structure comprising a second ownership record having a public key of the buyer, where the public key of the buyer is endorsed with a signature of the seller; update the first title of the first device to include the second ownership record; and store the updated first title in a secure storage. The device may further include the secure storage coupled to the first processor to store the updated first title.

In Example 2, the first title further comprises: a first set of static fields to store a device description, a manufacturer identifier, a manufacturer public key, and a manufacturer signature field; a second set of dynamic fields to store the buyer public key and an endorsement of the seller; and a device identifier of the device.

In Example 3, the first TEE is to change the device identifier to a new device identifier responsive to the ownership transfer, and store the new device identifier in the updated first title and in a non-volatile storage of the device.

In Example 4, the first title is to cryptographically bind a plurality of device owners of the device to the first title according to a number of times an ownership transfer occurred.

In Example 5, the first TEE, responsive to a read request from a verifier, is to generate a hash value of a device identifier list of the updated first title.

In Example 6, the first TEE is to provide the hash value to the verifier to enable the verifier to verify an ownership transfer chain of the device, without access to one or more device identifiers.

In Example 7, the first TEE is to establish proximity of the buyer during the secure key exchange, and prevent the ownership transfer if the proximity is not established.

In Example 8, the updated first title comprises a block chain of a plurality of ownership transactions of the device, where the device is to provide the block chain to a third party for independent validation of an ownership transfer chain of the device.

In Example 9, a method comprises: receiving, in the device, a first message to request transfer of ownership of the device from a current owner to a new owner, the device having a storage to store a first title including a device identifier for the device and an owner identifier for the current owner, the storage to further store a first root authorization key associated with the current owner; sending a second message from the device to the new owner, the second message including a hash value of the first title; and receiving a third message, in the device, the third message including a second ownership record for the device, the second ownership record generated by the new owner and including a new owner identifier, and concatenating the second ownership record to the first title, to enable ownership of the device to be transferred to the new owner.

In Example 10, the method of Example 9 further comprises storing the concatenated first title in the storage, to associate ownership of the device with the new owner.

In Example 11, the method further comprises replacing the first root authorization key with a second root authorization key received from the new owner.

In Example 12, the method further comprises performing a key exchange between the device and a second device of the new owner, prior to receipt of the first message, to receive a public key of the second device.

In Example 13, the method further comprises receiving a first DAA group verification key of the second device and a first keyed hash, and verifying the first DAA group verification key and the first keyed hash, prior to receipt of the first message.

In Example 14, the method further comprises updating the device identifier for the device to a second device identifier, responsive to the transfer of ownership to the new owner.

In Example 15, the method further comprises encrypting the concatenated first title, where the concatenated first title is to be stored in a secure storage of the device.

In Example 16, a method comprises: receiving, in a device, a request to transfer of ownership of the device from a seller to a buyer, the device having a storage to store a title including a device identifier for the device and an owner identifier for the seller, the storage to further store a first root authorization key associated with the seller; generating and sending a hash value of the title from the device to a second device associated with the buyer; receiving, in the device, an ownership record for the ownership transfer from the seller to the buyer, the ownership record including a new owner identifier; endorsing, in the device, the ownership record with a signature of the seller; and appending, in the device, the endorsed ownership record to the title, to reflect the ownership transfer from the seller to the buyer, and storing the appended title in a secure storage of the device.

In Example 17, the method of Example 16 further comprises replacing the first root authorization key associated with the seller with a second root authorization key associated with the buyer, the second root authorization key received from the second device.

In Example 18, the method of one or more of the above Examples further comprises performing a secure key exchange between the device and the second device, prior to receipt of the request to transfer ownership of the device, to receive a public key of the second device.

In Example 19, the secure key exchange of one or more of the above Examples comprises: receiving, in the device, a first DAA group verification key and a first keyed hash; and verifying, in the device, the first DAA group verification key and the first keyed hash.

In Example 20, the method of one or more of the above Examples further comprises updating the device identifier for the device to a second device identifier, responsive to the ownership transfer, and storing the second device identifier in the title in a non-volatile storage of the device.

In another example, a computer readable medium including instructions is to perform the method of any of the above Examples.

In another example, a computer readable medium including data is to be used by at least one machine to fabricate at least one integrated circuit to perform the method of any one of the above Examples.

In another example, an apparatus comprises means for performing the method of any one of the above Examples.

In Example 21, a device comprises: means for receiving a request to transfer of ownership of the device from a seller to a buyer, the device having a storage means for storing a title including a device identifier for the device and an owner identifier for the seller, the storage means for further storing a first root authorization key associated with the seller; means for generating and sending a hash value of the title from the device to a second device associated with the buyer; means for receiving an ownership record for the ownership transfer from the seller to the buyer, the ownership record including a new owner identifier; means for endorsing the ownership record with a signature of the seller; means for appending the endorsed ownership record to the title to reflect the ownership transfer from the seller to the buyer; and means for storing the appended title in a secure storage of the device.

In Example 22, the device of Example 21 further comprises means for replacing the first root authorization key associated with the seller with a second root authorization key associated with the buyer, the second root authorization key received from the second device.

In Example 23, the device of one or more of the above Examples further comprises means for performing a secure key exchange between the device and the second device, prior to receipt of the request to transfer ownership of the device, to receive a public key of the second device.

In Example 24, the device further comprises: means for receiving a first DAA group verification key and a first keyed hash; and means for verifying the first DAA group verification key and the first keyed hash.

In Example 25, the device of one or more of the above Examples further comprises means for updating the device identifier for the device to a second device identifier, responsive to the ownership transfer, and means for storing the second device identifier in the title.

Understand that various combinations of the above Examples are possible.

Embodiments may be used in many different types of systems. For example, in one embodiment a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

Embodiments may be implemented in code and may be stored on a non-transitory storage medium having stored thereon instructions which can be used to program a system to perform the instructions. Embodiments also may be implemented in data and may be stored on a non-transitory storage medium, which if used by at least one machine, causes the at least one machine to fabricate at least one integrated circuit to perform one or more operations. The storage medium may include, but is not limited to, any type of disk including floppy disks, optical disks, solid state drives (SSDs), compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

While the present invention has been described with respect to a limited number of embodiments, those skilled in the art will appreciate numerous modifications and variations therefrom. It is intended that the appended claims cover all such modifications and variations as fall within the scope of this present invention.

## Claims

1. A device (310) comprising:
a first processor (950) to execute in a first trusted execution environment, TEE, wherein, in the first TEE, the first processor is configured to:
perform a secure key exchange between the device (310) and a second device (320), responsive to a request to transfer ownership of the device from a seller to a buyer;
generate a hash of a first title of the device, the first title comprising a first ownership record having a public key of the seller, wherein the public key of the seller is endorsed with a signature of a second seller that sold the device to the seller;
send the hash of the first title to the second device;
receive a new title structure from the second device, the new title structure comprising a second ownership record having a public key of the buyer, wherein the public key of the buyer is endorsed with a signature of the seller;
update the first title of the first device to include the second ownership record; and
store the updated first title in a secure storage; and
the secure storage coupled to the first processor to store the first updated title.

2. The device of claim 1, wherein the first title further comprises:
a first set of static fields to store a device description, a manufacturer identifier, a manufacturer public key, and a manufacturer signature field;
a second set of dynamic fields to store the buyer public key and an endorsement of the seller; and
a device identifier of the device.

3. The device of claim 2, wherein the first TEE is to change the device identifier to a new device identifier responsive to the ownership transfer, and store the new device identifier in the updated first title and in a non-volatile storage of the device.

4. The device of claim 1, wherein the first title is to cryptographically bind a plurality of device owners of the device to the first title according to a number of times an ownership transfer occurred.

5. The device of any one of claims 1-4, wherein the first TEE, responsive to a read request from a verifier configured to verify ownership, including generating a hash value of a device identifier list of the updated first title.

6. The device of claim 5, wherein the first TEE is to provide the hash value to the verifier to enable the verifier to verify an ownership transfer chain of the device, without access to one or more device identifiers.

7. The device of any one of claims 1-4, wherein the first TEE is to establish proximity of the buyer during the secure key exchange, and to prevent the ownership transfer if the proximity is not established.

8. The device of any one of claims 1-4, wherein the updated first title comprises a block chain of a plurality of ownership transactions of the device, wherein the device is to provide the block chain to a third party for independent validation of an ownership transfer chain of the device.

9. A method executable by a first processor in a first trusted execution environment, TEE, the method comprising the steps of:
performing (220) a secure key exchange between the device and a second device, responsive to a request to transfer ownership of the device from a seller to a buyer;
generating (240) a hash of a first title of the device, the first title comprising a first ownership record having a public key of the seller, wherein the public key of the seller is endorsed with a signature of a second seller that sold the device to the seller;
sending (250) the hash of the first title to the second device;
receiving (260) a new title structure from the second device, the new title structure comprising a second ownership record having a public key of the buyer, wherein the public key of the buyer is endorsed with a signature of the seller;
updating the first title of the first device to include the second ownership record; and
storing (280) the updated first title in a secure storage.

10. Method of claim 9, comprising:
endorsing, in the device, the ownership record with a signature of the seller; and
appending, in the device, the endorsed ownership record to the title, to reflect the ownership transfer from the seller to the buyer, and storing the appended title in a secure storage of the device.

11. An apparatus comprising means adapted to perform a method as claimed in any one of claims 9 to 10.

12. A machine-readable storage medium including machine-readable instructions, when executed, adapted to implement a method as claimed in any one of claims 9 to 10.

## Patentansprüche

1. Vorrichtung (310), umfassend:
einen Prozessor (950) zum Ausführen in einer ersten vertrauenswürdigen Ausführungsumgebung, TEE, wobei, in der ersten TEE, der erste Prozessor zu Folgendem ausgestaltet ist:
Durchführen eines Sicherheitsschlüsselaustauschs zwischen der Vorrichtung (310) und einer zweiten Vorrichtung (320) in Reaktion auf eine Anforderung für einen Übergang eines Eigentums der Vorrichtung von einem Verkäufer auf einen Käufer;
Erzeugen eines Hash eines ersten Titels der Vorrichtung, wobei der erste Titel einen ersten Eigentumsdatensatz mit einem öffentlichen Schlüssel des Verkäufers umfasst, wobei der öffentliche Schlüssel des Verkäufers mit einer Signatur eines zweiten Verkäufers bestätigt ist, der die Vorrichtung an den Verkäufer verkauft hat;
Senden des Hash des ersten Titels an die zweite Vorrichtung;
Empfangen einer neuen Titelstruktur von der zweiten Vorrichtung, wobei die neue Titelstruktur einen zweiten Eigentumsdatensatz mit einem öffentlichen Schlüssel des Käufers umfasst, wobei der öffentliche Schlüssel des Käufers mit einer Signatur des Verkäufers bestätigt ist;
Aktualisieren des ersten Titels der ersten Vorrichtung, sodass er den zweiten Eigentumsdatensatz beinhaltet; und
Speichern des aktualisierten ersten Titels in einem sicheren Speicher; und
wobei der sichere Speicher mit dem ersten Prozessor zum Speichern des ersten aktualisierten Titels gekoppelt ist.

2. Vorrichtung nach Anspruch 1, wobei der erste Titel ferner umfasst:
einen ersten Satz von statischen Feldern zum Speichern einer Vorrichtungsbeschreibung, einer Herstellerkennung, eines öffentlichen Herstellerschlüssels und eines Herstellersignaturfelds;
einen zweiten Satz von dynamischen Feldern zum Speichern des öffentlichen Käuferschlüssels und einer Bestätigung des Verkäufers; und
eine Vorrichtungskennung der Vorrichtung.

3. Vorrichtung nach Anspruch 2, wobei die erste TEE die Vorrichtungskennung in eine neue Vorrichtungskennung in Reaktion auf den Eigentumsübergang ändert, und die neue Vorrichtungskennung in dem aktualisierten ersten Titel und in einem nichtflüchtigen Speicher der Vorrichtung speichert.

4. Vorrichtung nach Anspruch 1, wobei der erste Titel dem kryptografischen Binden einer Mehrzahl von Vorrichtungseigentümern der Vorrichtung an den ersten Titel gemäß einer Anzahl an Malen, die ein Eigentumsübergang stattgefunden hat, dient.

5. Vorrichtung nach einem der Ansprüche 1-4, wobei die erste TEE, in Reaktion auf eine Leseanforderung von einem Verifizierer, der ausgestaltet ist, ein Eigentum zu verifizieren, Erzeugen eines Hashwerts einer Vorrichtungskennungsliste des aktualisierten ersten Titels umfasst.

6. Vorrichtung nach Anspruch 5, wobei die erste TEE den Hashwert zu dem Verifizierer bereitstellt, um dem Verifizierer zu ermöglichen, eine Eigentumsübergangskette der Vorrichtung ohne Zugriff auf eine oder mehrere Vorrichtungskennungen zu verifizieren.

7. Vorrichtung nach einem der Ansprüche 1-4, wobei die erste TEE eine Nähe des Käufers während des sicheren Schlüsselaustauschs bestimmt, und den Eigentumsübergang verhindert, wenn die Nähe nicht bestimmbar ist.

8. Vorrichtung nach einem der Ansprüche 1-4, wobei der aktualisierte erste Titel eine Blockchain einer Mehrzahl von Eigentumstransaktionen der Vorrichtung umfasst, wobei die Vorrichtung die Blockchain zu einem Dritten für eine unabhängige Validierung einer Eigentumsübergangskette der Vorrichtung bereitstellt.

9. Verfahren, das durch einen ersten Prozessor in einer ersten vertrauenswürdigen Ausführungsumgebung, TEE, ausführbar ist, wobei das Verfahren die folgenden Schritte umfasst:
Durchführen (220) eines Sicherheitsschlüsselaustauschs zwischen der Vorrichtung und einer zweiten Vorrichtung in Reaktion auf eine Anforderung für einen Übergang eines Eigentums der Vorrichtung von einem Verkäufer auf einen Käufer;
Erzeugen (240) eines Hash eines ersten Titels der Vorrichtung, wobei der erste Titel einen ersten Eigentumsdatensatz mit einem öffentlichen Schlüssel des Verkäufers umfasst, wobei der öffentliche Schlüssel des Verkäufers mit einer Signatur eines zweiten Verkäufers bestätigt ist, der die Vorrichtung an den Verkäufer verkauft hat;
Senden (250) des Hash des ersten Titels an die zweite Vorrichtung;
Empfangen (260) einer neuen Titelstruktur von der zweiten Vorrichtung, wobei die neue Titelstruktur einen zweiten Eigentumsdatensatz mit einem öffentlichen Schlüssel des Käufers umfasst, wobei der öffentliche Schlüssel des Käufers mit einer Signatur des Verkäufers bestätigt ist;
Aktualisieren des ersten Titels der ersten Vorrichtung, sodass er den zweiten Eigentumsdatensatz beinhaltet; und
Speichern (280) des aktualisierten ersten Titels in einem sicheren Speicher.

10. Verfahren nach Anspruch 9, umfassend:
Bestätigen, in der Vorrichtung, des Eigentumsdatensatzes mit einer Signatur des Verkäufers; und
Anfügen, in der Vorrichtung, des bestätigten Eigentumsdatensatzes an den Titel, um den Eigentumsübergang von dem Verkäufer auf den Käufer widerzuspiegeln, und Speichern des Titels mit der Anfügung in einem sicheren Speicher der Vorrichtung.

11. Einrichtung, umfassend Mittel, die ausgelegt sind, ein Verfahren nach einem der Ansprüche 9 bis 10 durchzuführen.

12. Maschinenlesbares Speichermedium, umfassend maschinenlesbare Anweisungen, die, wenn sie ausgeführt werden, ausgelegt sind, ein Verfahren nach einem der Ansprüche 9 bis 10 zu implementieren.

## Revendications

1. Dispositif (310) comprenant :
un premier processeur (950) destiné à exécuter dans un premier environnement d'exécution de confiance, TEE, le premier processeur, dans le premier TEE, étant configuré pour :
effectuer un échange de clés sécurisé entre le dispositif (310) et un deuxième dispositif (320), en réponse à une demande de transfert de la propriété du dispositif d'un vendeur vers un acheteur ;
générer une empreinte numérique d'un premier titre du dispositif, le premier titre comprenant un premier enregistrement de propriété ayant une clé publique du vendeur, la clé publique du vendeur étant endossée avec une signature d'un deuxième vendeur qui a vendu le dispositif au vendeur ;
envoyer l'empreinte numérique du premier titre au deuxième dispositif ;
recevoir une nouvelle structure de titre provenant du deuxième dispositif, la nouvelle structure de titre comprenant un deuxième enregistrement de propriété ayant une clé publique de l'acheteur, la clé publique de l'acheteur étant endossée avec une signature du vendeur ;
mettre à jour le premier titre du premier dispositif pour y inclure le deuxième enregistrement de propriété ; et
stocker le premier titre mis à jour dans une zone de stockage sécurisée ; et
la zone de stockage sécurisé étant couplée au premier processeur pour le stockage du premier titre mis à jour.

2. Dispositif selon la revendication 1, dans lequel le premier titre comprend également :
un premier ensemble de champs statiques servant à stocker une description de dispositif, un identifiant de fabricant, une clé publique de fabricant et un champ de signature de fabricant ;
un deuxième ensemble de champs dynamiques servant à stocker la clé publique d'acheteur et un endossement du vendeur ; et
un identifiant de dispositif du dispositif.

3. Dispositif selon la revendication 2, dans lequel le premier TEE doit changer l'identifiant de dispositif en un nouvel identifiant de dispositif en réponse au transfert de propriété, et stocker le nouvel identifiant de dispositif dans le premier titre mis à jour et dans une zone de stockage non volatile du dispositif.

4. Dispositif selon la revendication 1, dans lequel le premier titre doit lier d'une manière cryptographique une pluralité de propriétaires de dispositif du dispositif au premier titre en fonction d'un nombre de fois où un transfert de propriété a eu lieu.

5. Dispositif selon l'une quelconque des revendications 1 à 4, dans lequel le premier TEE, en réponse à une demande de lecture provenant d'un vérificateur configuré pour vérifier la propriété, comprend la génération d'une valeur d'empreinte numérique d'une liste d'identifiants de dispositif du premier titre mis à jour.

6. Dispositif selon la revendication 5, dans lequel le premier TEE doit fournir la valeur d'empreinte numérique au vérificateur pour permettre au vérificateur de vérifier une chaîne de transferts de propriété du dispositif, sans accès à un ou plusieurs identifiants de dispositif.

7. Dispositif selon l'une quelconque des revendications 1 à 4, dans lequel le premier TEE doit établir la proximité de l'acheteur durant l'échange de clés sécurisé, et doit empêcher le transfert de propriété si la proximité n'est pas établie.

8. Dispositif selon l'une quelconque des revendications 1 à 4, dans lequel le premier titre mis à jour comprend une chaîne de blocs d'une pluralité de transactions de propriété du dispositif, le dispositif devant fournir la chaîne de blocs à un tiers pour la validation indépendante d'une chaîne de transferts de propriété du dispositif.

9. Procédé exécutable par un premier processeur dans un premier environnement d'exécution de confiance, TEE, le procédé comprenant les étapes consistant à :
effectuer (220) un échange de clés sécurisé entre le dispositif et un deuxième dispositif, en réponse à une demande de transfert de la propriété du dispositif d'un vendeur vers un acheteur ;
générer (240) une empreinte numérique d'un premier titre du dispositif, le premier titre comprenant un premier enregistrement de propriété ayant une clé publique du vendeur, la clé publique du vendeur étant endossée avec une signature d'un deuxième vendeur qui a vendu le dispositif au vendeur ;
envoyer (250) l'empreinte numérique du premier titre au deuxième dispositif ;
recevoir (260) une nouvelle structure de titre provenant du deuxième dispositif, la nouvelle structure de titre comprenant un deuxième enregistrement de propriété ayant une clé publique de l'acheteur, la clé publique de l'acheteur étant endossée avec une signature du vendeur ;
mettre à jour le premier titre du premier dispositif pour y inclure le deuxième enregistrement de propriété ; et
stocker (280) le premier titre mis à jour dans une zone de stockage sécurisée.

10. Procédé selon la revendication 9, comprenant les étapes consistant à :
endosser, dans le dispositif, l'enregistrement de propriété avec une signature du vendeur ; et
ajouter, dans le dispositif, l'enregistrement de propriété endossé au titre, pour refléter le transfert de propriété du vendeur vers l'acheteur, et stocker le titre ajouté dans une zone de stockage sécurisée du dispositif.

11. Appareil comprenant un moyen permettant d'effectuer un procédé selon l'une quelconque des revendications 9 et 10.

12. Support de stockage lisible par machine contenant des instructions lisibles par machine qui, lorsqu'elles sont exécutées, permettent de mettre en œuvre un procédé selon l'une quelconque des revendications 9 et 10.
